(19) Europäisches Patentamt / European Patent Office / Office européen des brevets

(11) **EP 4 092 824 A2**

(12) # EUROPEAN PATENT APPLICATION

(43) Date of publication:
**23.11.2022 Bulletin 2022/47**

(21) Application number: **22174353.7**

(22) Date of filing: **19.05.2022**

(51) International Patent Classification (IPC):
***H01M 50/533*** (2021.01)

(52) Cooperative Patent Classification (CPC):
**H01M 50/533;** H01M 2220/20; Y02E 60/10

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.05.2021 CN 202121078006 U**

(71) Applicant: **Shanghai Autoflight Co., Ltd.**
**Jinshan District**
**Shanghai**
**201500 (CN)**

(72) Inventor: **TIAN, Yu**
**North Point (HK)**

(74) Representative: **MERH-IP Matias Erny Reichl Hoffmann**
**Patentanwälte PartG mbB**
**Paul-Heyse-Strasse 29**
**80336 München (DE)**

(54) ## A BATTERY TAB CONNECTION STRUCTURE AND A BATTERY PACK

(57) The application discloses a battery tab connection structure and a battery pack, which relates to the technical field of lithium batteries. The battery tab connection structure includes a first tab 1, a second tab 2 and a fastener 4, at least one of the first tab 1 and the second tab 2 is provided with a notch 11, the first tab 1 and the second tab 2 are inserted and fixed through the notch 11 and fit with each other, and the fastener 4 can be detachably and fixedly connected with the first tab 1 and the second tab 2. The application is provided with the notch 11 on at least one of the first tab 1 and the second tab 2, the first tab 1 and the second tab 2 are inserted and fixed through the notch 11 and fit with each other, and then detachably and fixedly connected with the first tab 1 and the second tab 2 through the fastener 4, so that the first tab 1 and the second tab 2 can ensure the insertion stability and fit of the two through the notch insertion. At the same time, it achieves the detachable fixation of the first tab 1 and the second tab 2, which is convenient for the disassembly and maintenance of a single tab, thus saving the economic cost.

Fig. 1

## Description

## Technical Field

The application relates to the technical field of lithium battery, in particular to a battery tab connection structure and a battery pack.

## Background Art

At present, the new energy industry is developing rapidly, and especially the development of pure electric new energy vehicles has reached a hot state. The tab of the cell in the power battery pack plays the role of conducting current. At present, the commonly used tab connection method is to fold the tabs of the plurality of cells and then weld them to the bus bar by laser.

However, it is difficult to disassemble and maintain a single damaged cell in the battery pack by using this method of laser welding, only the corresponding multiple cells can be replaced at the same time with high economic cost.

Based on this, there is an urgent need for a battery tab connection structure and a battery pack to solve the problems mentioned above.

## Contents of the Application

The purpose of the application is to provide a battery tab connection structure and a battery pack, which can ensure the insertion stability and fit of the first tab and the second tab, facilitate the disassembly and maintenance of a single tab, and save the economic cost.

To achieve this purpose, the application adopts the following technical solution: The application provides a battery tab connection structure, which comprises a first tab, a second tab and a fastener at least one of the first tab and the second tab is provided with a notch. The first tab and the second tab are inserted and fixed through the notch and fit with each other. The fastener can be detachably and fixedly connected with the first tab and the second tab.

The notch is arranged on the first tab.

The battery tab connection structure also includes a heat-conducting copper strip, the heat-conducting copper strip is arranged on the top and/or bottom surface of the insertion position of the first tab and the second tab, and the heat-conducting copper strip is fixedly connected with the fastener.

Both the first tab and the second tab are provided with the notch.

The battery tab connection structure also includes a heat-conducting copper strip, which is inserted into the notch and located between the first tab and the second tab, and/or the heat-conducting copper strip is arranged on the top and/or bottom surfaces of the insertion position of the first tab and the second tab, and the heat-conducting copper strip is fixedly connected with the fastener.

The width of the heat-conducting copper strip between the first tab and the second tab matches the length of the notch.

The notch is opened along the width direction of the first tab or the second tab.

The fastener is a locking screw, which is locked with the first tab and the second tab.

The plurality of first tabs and second tabs are provided, the plurality of the first tabs and the plurality of the second tabs are stacked in turn to form the first tab group and the second tab group, respectively, the first tab group and the second tab group are inserted and fixed with each other through the notch, and the fastener can be detachably and fixedly connected with the first tab group and the second tab group.

The application also provides a battery pack, which comprises the plurality of cells, the battery pack also comprises the battery tab connection structure as described above, and the first tab and the second tab are connected to the two adjacent cells, respectively.

The application provides a battery tab connection structure and a battery pack. Through a notch opened on at least one of the first tab and the second tab, the first tab and the second tab are inserted and fixed through the notch and fit with each other, and then detachably and fixedly connected with the first tab and the second tab through the fastener, so that the first tab and the second tab ensure their insertion stability and fit through the notch insertion, and achieve the detachable fixation of the first tab and the second tab, which is convenient for the disassembly and maintenance of a single tab and saves the financial cost.

## Brief Description of the Drawings

Fig. 1 is the structural diagram of the first tab and the second tab provided by embodiment 1 of the application;
Fig. 2 is the structural diagram of the insertion of the first tab and the second tab provided by embodiment 1 of the application;
Fig. 3 is the partial structural diagram of the battery tab connection structure provided by embodiment 1 of the application;
Fig. 4 is the overall structural diagram of the battery tab connection structure provided by embodiment 1 of the application;
Fig. 5 is the structural diagram of the first tab and the second tab provided by embodiment 2 of the application;
Fig. 6 is the partial structural diagram of the battery tab connection structure provided in embodiment 2 of the application;
Fig. 7 is the overall structural diagram of the battery tab connection structure provided in embodiment 2 of the application.

In the figure:

1. First tab; 11. Notch; 2. Second tab; 3. Heat-conducting copper strip; 4. Fastener.

**Detailed Description**

In order to make clear the technical problems solved, the technical solution adopted and the technical effect achieved by the application, the technical solution of the embodiment of the application will be further described in detail below in combination with the attached drawings. Obviously, the described embodiments are only part of the embodiments of the application, rather than all of the embodiments. Based on the embodiments of the application, all other embodiments obtained by those skilled in the art without creative work fall within the protection scope of the application.

In the description of the application, unless otherwise specified and limited, the terms "connect", "connection" and "fix" should be understood in a broad sense. For example, it may be fixed connection, detachable connection, or integrated; it may be mechanical connection or electrical connection; it may be direct connection or indirect connection through an intermediate medium. It may be the connection within two elements or the interaction between two elements. For those skilled in the art, the specific meaning of the above terms in the application can be understood according to the specific situation.

In the application, unless otherwise clearly specified and limited, the first feature "on" or "under" the second feature may include the direct contact between the first and second features, or the contact between the first and second features that is not direct contact, but through another feature between them. Moreover, the first feature "on", "over", and "above" the second feature may include the first feature directly above and obliquely above the second feature, or only indicates that the horizontal height of the first feature is higher than the second feature. The first feature "under", "below" and "beneath" the second feature, may include the first feature directly below and obliquely below the second feature, or only indicate that the horizontal height of the first feature is smaller than that of the second feature.

The technical solution of the application is further described below in combination with the attached drawings and through specific embodiments.

Embodiment 1

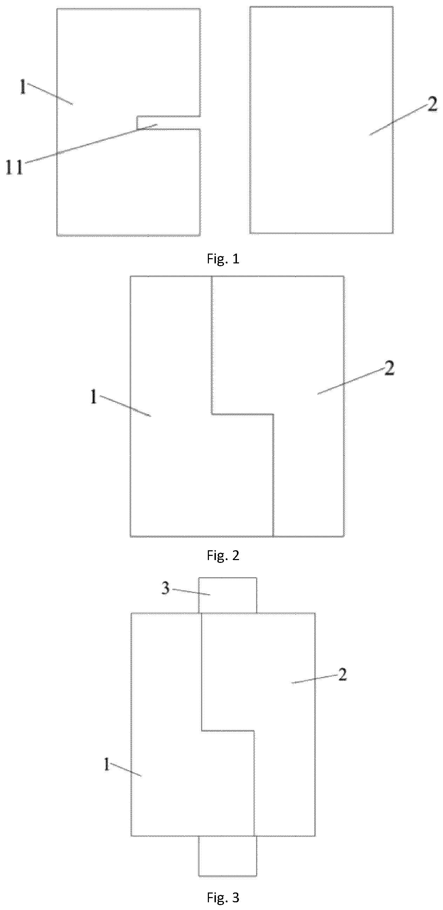

One embodiment of the application discloses a battery tab connection structure, as shown in Fig. 1 - Fig. 4. The battery tab connection structure comprises a first tab 1, a second tab 2 and a fastener 4. At least one of the first tab 1 and the second tab 2 is provided with a notch 11. The first tab 1 and the second tab 2 are inserted and fixed through the notch 11 and fit with each other. The fastener 4 can be detachably and fixedly connected with the first tab 1 and the second tab 2.

The application is provided with the notch 11 on at least one of the first tab 1 and the second tab 2, the first tab 1 and the second tab 2 are inserted and fixed through the notch 11 and fit with each other, and then detachably and fixedly connected with the first tab 1 and the second tab 2 through the fastener 4, so as to ensure the insertion stability and fit of the first tab 1 and the second tab 2 through the notch 11, and simultaneously achieve the detachable fixation of the first tab 1 and the second tab 2, thereby facilitating the disassembly and maintenance of a single tab and saving the financial cost.

In this embodiment, one first tab 1 and one second tab 2 are provided to realize the series connection of two adjacent cells. Of course, in other embodiments, the plurality of first tabs 1 and second tabs 2 may be provided so that the plurality of first tabs 1 and the plurality of second tabs 2 are stacked successively to form the first tab group and the second tab group, respectively. The first tab group and the second tab group are inserted and fixed with each other through the notch 11. The fastener 4 may be detachably and fixedly connected with the first tab group and the second tab group, so as to realize the series and parallel connection structure between the plurality of cells.

As shown in Fig. 1 and Fig. 2, the notch 11 is opened along the width direction of the first tab 1 or the second tab 2. In this embodiment, the notch 11 is opened on the first tab 1, with the length of the notch 11 being half of the width of the first tab 1, and the second tab 2 is inserted into the notch 11, and the second tab 2 and the first tab 1 are fit with each other to ensure the current overcurrent capacity. It should be noted that the first tab 1 and the second tab 2 connected to the cell are generally made of nickel sheet, which mainly plays the role of conducting current. In other embodiments, the length of the notch 11 may also be set as needed. For example, the length of the notch 11 may be equal to the width of the first tab 1, which is not limited to the scheme of this embodiment.

Further, locking holes are provided on the first tab 1 and the second tab 2 to facilitate the connection of the fastener 4.

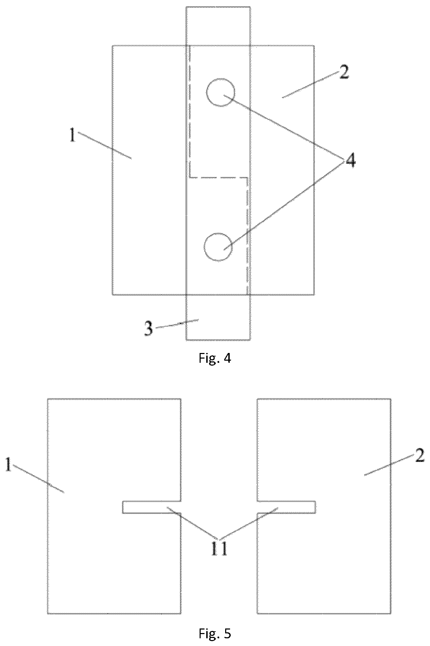

As shown in Fig. 3 and Fig. 4, in order to realize the heat conduction, heat dissipation and confluence of the first tab 1 and the second tab 2, the battery tab connection structure also includes a heat-conducting copper strip 3, which is arranged on the top and bottom surfaces of the insertion points of the first tab 1 and the second tab 2, and the heat-conducting copper strip 3 is fixedly connected with the fastener 4. The application is provided with the heat-conducting copper strip 3 on the top and bottom surfaces of the insertion points of the first tab 1 and the second tab 2, so as to play a good role in heat conduction, heat dissipation and confluence for the tab and reduce the heating. In other embodiments, only one of the top and bottom surfaces of the tab insertion points can be provided with a heat-conducting copper strip 3 according to the actual needs, which is not limited to this embodiment.

Considering the extremely low thickness of the first tab 1 and the second tab 2, it is not convenient to open a threaded hole on them. However, considering the greater thickness of the heat-conducting copper strip 3, a threaded hole is opened on the heat-conducting copper strip 3 in this application to facilitate its thread fixation with the fastener 4.

The fastener 4 is a locking screw, which is threaded through the locking holes on the first tab 1 and the second tab 2 and fixed in the threaded holes on the heat-conducting copper strip 3, so as to realize the detachable fixation of the first tab 1 and the second tab 2. In other embodiments, the fastener 4 may also be set as such structure as bolt or pin, which is not limited to the scheme of this embodiment.

In order to better understand the technical solution of this embodiment, we compare the existing solution of direct stacking and fit of two tabs (direct surface-to-surface fit of two tabs) with the technical solution of this application in which the heat-conducting copper strips 3 are set on the top and bottom surfaces of the insertion points of the first tab 1 and the second tab 2, and calculate the heating power consumption, so as to show that the solution of this application can reduce the heating of the tab. It should be noted that for the convenience of calculation, the notch 11 is opened in the middle of the first tab 1, and the middle of the second tab 2 is inserted into the notch 11.

Assuming that the contact resistance between the two tabs through surface-to-surface fit is R1, the internal resistance of the tab conduction section is R2, the internal resistance of the conduction section of the heat-conducting copper strip 3 is R3, and I is current, since the thickness of copper is greater than the tab thickness and the conductivity of copper is greater than that of nickel, R3 is far less than R2. We roughly calculate the power consumption in the two cases, respectively, as follows: The heating power consumption when the tabs are directly connected through surface-to-surface fit is about $P1 = I^2R1 + I^2R2$.

When the solution of this embodiment is adopted, the total current I remains unchanged, the heat-conducting copper strip 3 on the top and bottom surfaces is in parallel connection with the first tab 1 and the second tab 2, the contact resistance between the first tab 1 and the second tab is R1, and the contact resistance between the heat-conducting copper strip 3 on the top surface and the contact surface of the first tab 1 is 2R1 (the contact surface is half of the indirect contact surface between the two tabs). Accordingly, the contact resistance between the heat-conducting copper strip 3 on the top surface and the contact surface of the second tab 2 is also 2R1. The two resistors are connected in series, so the total contact resistance is 4R1. Similarly, the contact resistance between the heat-conducting copper strip 3 on the bottom surface and the first tab 1, and the second tab 2 is also 4R1. The above resistors are connected in parallel. First, the impedance of two contact resistors 4R1 in parallel is 2R1, and then 2R1 is connected in parallel with R1. Then we will obtain the impedance

$$R_{\#}, R_{\#} = R1 \times \frac{2R1}{R1+2R1} = \frac{2R1}{3}.$$

Plus the power consumption of the conduction section of the tab and the conduction section of the heat-conducting copper strip 3, the heating power consumption is calculated as $P_2 = I^2 \times \frac{2R1}{3} + I^2 \times \frac{R3 \times R2}{R3+R2}$. By comparing $P_1$ and $P_2$, we can conclude that the contact heating power consumption is reduced by 1/3. Generally, due to $R3 < \frac{1R2}{10}$, by substituting $R3 = \frac{1R2}{10}$ into the said equation, we can obtain $P_2 \approx I^2 \times \frac{2R1}{3} + I^2 \times \frac{1R2}{11}$. By comparing P2 and $P_1$, we can find that in this embodiment, the heat-conducting copper strip 3 is arranged for current conduction, so that the heating power consumption of the conduction section is reduced by more than 11 times, resulting in good heat-conducting performance.

In addition, since the current in this embodiment flows between the first tab 1 and the second tab 2, among the first tab 1, the second tab 2 and the heat-conducting copper strip 3 on the top surface, and among the first tab 1, the second tab 2 and the heat-conducting copper strip 3 on the bottom surface, and compared with the existing way that the current flows only in a single surface, it reduces the flow resistance of the current and the conduction and heating in the nickel sheet (the first tab 1 and the second tab 2). Based on the above calculation and analysis, the battery tab connection structure of this embodiment can effectively reduce the temperature.

The embodiment also discloses a battery pack, which comprises the plurality of cells and a battery tab connection structure as described above. The first tab 1 and the second tab 2 are arranged on two adjacent cells, respectively.

To sum up, the embodiment of the application provides a battery tab connection structure and a battery pack. By opening a notch 11 on at least one of the first tab 1 and the second tab 2, the first tab 1 and the second tab 2 are inserted and fixed through the notch 11 and fit with each other, and then detachably and fixedly connected with the first tab 1 and the second tab 2 through the fastener 4, so that the first tab 1 and the second tab 2 are inserted through the notch 11 to ensure the insertion stability and fit of the two, and simultaneously achieve the detachable fixation of the first tab 1 and the second tab 2, thereby facilitating the disassembly and maintenance of a single tab and saving the financial cost.

Embodiment 2

In this embodiment, the same parts as Embodiment 1 are given the same drawing marks with the same text description omitted.

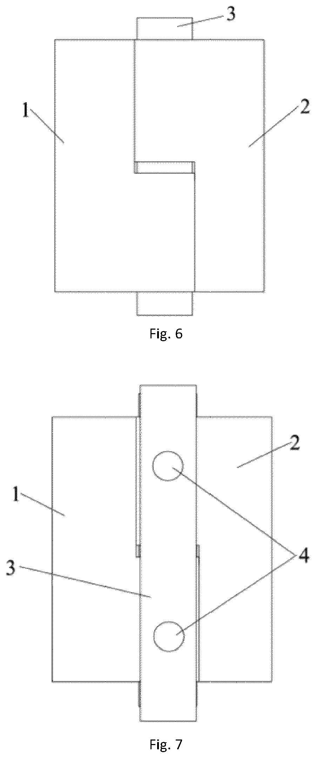

Figs. 5 - 7 are schematic diagrams of a battery tab connection structure provided in Embodiment 2 of the application. As shown in Figs. 5 - 7, compared with Embodiment 1, the battery tab connection structure provided in this embodiment has the following differences: the first tab 1 and the second tab 2 are provided with the notch 11, and the first tab 1 and the second tab 2 are inserted and fixed with each other through the two notch 11.

Further, 3 heat-conducting copper strips 3 in this embodiment is provided, which are inserted into the notch 11 and located between the first tab 1 and the second tab 2, respectively. The top and bottom surfaces of the insertion positions of the first tab 1 and the second tab 2 are used for heat conduction to the top surface of, the contact surface between, and the bottom surface of, the first tab 1 and the second tab 2 at the same time, respectively, so as to further improve the heat conduction and heat dissipation performance, and adapt to the use of large cells. Of course, in other embodiments, one or the plurality of heat-conducting copper strip 3 may also be provided between the first tab 1 and the second tab 2, and at the top and bottom surfaces of the insertion positions of the first tab 1 and the second tab 2, which is not limited to this embodiment.

In this embodiment, the width of the heat-conducting copper strip 3 located between the first tab 1 and the second tab 2 matches the length of the notch 11, so as to better conduct heat and dissipate heat on the insertion contact surface of the first pole tab 1 and the second tab 2.

Obviously, the above embodiments of the application are only given to clearly illustrate the examples given by the application, rather than to limit the embodiment of the application. For those of ordinary skill in the art, other changes or alterations in different forms may be made on the basis of the above description. It is unnecessary and impossible to enumerate all the embodiments here. Any modification, equivalent replacement and improvement made based on the spirit and principles of the application shall be included in the protection scope of the claims of the application.

**Claims**

1. A battery tab connection structure is **characterized in that** it comprises a first tab (1), a second tab (2) and a fastener (4), at least one of the first tab (1) and the second tab (2) is provided with a notch (11), the first tab (1) and the second tab (2) are inserted and fixed through the notch (11) and fit with each other, and the fastener (4) can be detachably and fixedly connected with the first tab (1) and the second tab (2).

2. The battery tab connection structure according to Claim 1, which is **characterized in that** the notch (11) is arranged on the first tab (1).

3. The battery tab connection structure according to Claim 2, which is **characterized in that** the battery tab connection structure further comprises a heat-conducting copper strip (3), the heat-conducting copper strip (3) is arranged on the top and/or bottom surfaces of the insertion positions of the first tab (1) and the second tab (2), and the heat-conducting copper strip (3) is fixedly connected with the fastener (4).

4. The battery tab connection structure according to Claim 1, which is **characterized in that** the notch (11) is arranged on the first tab (1) and the second tab (2).

5. The battery tab connection structure according to Claim 4, which is **characterized in that** the battery tab connection structure further comprises a heat-conducting copper strip (3), the heat-conducting copper strip (3) is inserted in the notch (11) and located between the first tab (1) and the second tab (2), and/or the heat-conducting copper strip (3) is arranged on the top and/or bottom of the insertion position of the first tab (1) and the second tab (2), the heat conducting copper strip (3) is fixedly connected with the fastener (4).

6. The battery tab connection structure according to Claim 5, which is **characterized in that** the width of the heat-conducting copper strip (3) located between the first tab (1) and the second tab (2) matches the length of the notch (11).

7. The battery tab connection structure according to Claim 1, which is **characterized in that** the notch (11) is opened along the width direction of the first tab (1) or the second tab (2).

8. The battery tab connection structure according to Claim 1, which is **characterized in that** the fastener (4) is a locking screw, which is locked with the first tab (1) and the second tab (2).

9. The battery tab connection structure according to Claim 1, which is **characterized in that** the plurality of first tabs (1) and second tabs (2) are provided, the plurality of first tabs (1) and the plurality of second tabs (2) are stacked successively to form the first tab group and the second tab group, respectively, the first tab group and the second tab are inserted into each other and fixed through the notch (11), and the fastener (4) can be detachably and fixedly connected with the first tab group and the second tab group.

10. A battery pack comprises a plurality of cells, which is **characterized in that** the battery pack also comprises a battery tab connection structure according to any one of Claims 1 - 9, and the first tab (1) and the second tab (2) are connected to two adjacent cells, respectively.

Fig. 1

Fig. 2

Fig. 3

Fig. 4

Fig. 5

Fig. 6

Fig. 7